# DEMANDE DE BREVET EUROPEEN

(11) **EP 4 046 861 A1**
(43) Date de publication de la demande: **24.08.2022**
(21) Numéro de dépôt: 22154604.7
(22) Date de dépôt: 01.02.2022
(51) Int. Cl.: B60L 58/20, B60L 50/53

(54) **DISPOSITIF D'ALIMENTATION D'URGENCE D'UN VÉHICULE FERROVIAIRE**

(30) Priorité: 18.02.2021 FR 2101548
(71) Demandeur: SNCF Voyageurs, 93200 Saint-Denis (FR)
(72) Inventeur: CHAMARET, André-Philippe, 72000 Le Mans (FR); VULTURESCU, Bogdan, 91300 Massy (FR); COYAUD, Martin, 37000 Tours (FR); MULLER, Emmanuel, 37100 Tours (FR)
(74) Mandataire: IPAZ

(57) **Abrégé**

L'invention concerne un dispositif autonome d'alimentation d'urgence (200) d'un véhicule ferroviaire (202), embarqué et utilisé lorsque ledit véhicule ferroviaire (202) n'est plus alimenté par une source d'alimentation externe, ledit dispositif (200) comprenant :
- une batterie haute tension (204) agencée pour alimenter une chaine de traction (206) du véhicule ferroviaire (202) via une première unité de conversion de puissance (208), et
- une batterie basse tension (210) agencée pour alimenter au moins un équipement auxiliaire (212),
ledit dispositif (200) est agencé de sorte que, lorsque le niveau de charge de ladite batterie basse tension (210) est inférieur ou égal à un premier seuil, la batterie haute tension (204) et basse tension (210) sont reliées l'une à l'autre via une deuxième unité de conversion de puissance (214) de manière à ce que ladite batterie basse tension (210) est alimentée par ladite batterie haute tension (204).

## Description

### Domaine technique

La présente invention concerne un dispositif d'alimentation d'urgence d'un véhicule ferroviaire. Elle concerne également un procédé d'alimentation d'urgence mettant en œuvre un tel dispositif et un véhicule ferroviaire comprenant un tel dispositif.

Le domaine de l'invention est le domaine ferroviaire, et plus particulièrement le domaine des dispositifs d'alimentation d'urgence de véhicules ferroviaires quand ces derniers ne peuvent être alimentés par une source d'énergie externe telle qu'une caténaire.

### Etat de la technique

Les véhicules ferroviaires sont alimentés par des sources externes, appelées caténaires. Des dysfonctionnements survenant au niveau de l'alimentation des véhicules ferroviaires engendrent des problèmes de sécurité et provoquent de longs retards.

On connaît des dispositifs d'alimentation permettant de répondre à des dysfonctionnements de l'alimentation de véhicule ferroviaire. Par exemple, une solution est d'utiliser une batterie embarquée audit véhicule pour alimenter à la fois la traction dudit véhicule et les équipements auxiliaires.

Ces solutions sont fonctionnelles mais posent divers problèmes, notamment :
- de puissance car une telle batterie ne peut fournir l'énergie nécessaire pour faire fonctionner le véhicule à sa puissance optimale. Souvent la traction du véhicule est privilégiée à l'alimentation optimale des équipements auxiliaires impactant ainsi le confort et les conditions sanitaires des usagers,
- de temps d'autonomie lié au point précédent,
- d'encombrement car la fourniture de l'énergie alimentant la traction et les équipements auxiliaires sur une période de temps prolongée demande d'utiliser des batteries embarquées très volumineuses et lourdes.

L'invention a pour but de pallier les inconvénients précités.

Notamment, un but de l'invention est de proposer un dispositif d'alimentation d'urgence d'un véhicule ferroviaire permettant de garantir un fonctionnement optimal dudit véhicule.

Un autre but de l'invention est de proposer un dispositif d'alimentation d'urgence d'un véhicule ferroviaire avec une autonomie augmentée dans temps.

Enfin un autre but de l'invention est de proposer un dispositif d'alimentation d'urgence d'un véhicule ferroviaire, moins lourd et moins volumineux.

### Exposé de l'invention

L'invention permet d'atteindre au moins un des buts précités par un dispositif autonome d'alimentation d'urgence d'un véhicule ferroviaire, embarqué dans ledit véhicule ferroviaire, utilisé lorsque ledit véhicule ferroviaire n'est plus alimenté par une source d'alimentation externe, ledit dispositif d'alimentation d'urgence comprenant :
- une batterie haute tension délivrant un signal électrique haute tension et agencée pour alimenter une chaine de traction du véhicule ferroviaire via une première unité de conversion de puissance, et
- une batterie basse tension délivrant un signal électrique basse tension et agencée pour alimenter au moins un équipement auxiliaire.

Le dispositif selon l'invention est agencé de sorte que, lorsque le niveau de charge de ladite batterie basse tension est inférieur ou égal à un premier seuil, la batterie haute tension et basse tension sont reliées l'une à l'autre via une deuxième unité de conversion de puissance de manière à ce que ladite batterie basse tension est alimentée par ladite batterie haute tension.

Ainsi, lorsque le niveau de charge de la batterie basse tension devient critique pour assurer l'alimentation des équipements auxiliaires, la batterie haute tension alimente la batterie basse tension, ce qui permet de conserver un fonctionnement optimal, i.e. sans dégradation de performance ni de confort, du véhicule ferroviaire lorsque ce dernier n'est pas alimenté pas une source d'énergie externe telle qu'une caténaire.

Le transfert d'énergie entre la batterie haute tension à la batterie basse tension permet aussi de prolonger l'alimentation des équipements auxiliaires, ce qui permet entres autres d'augmenter le temps d'autonomie de l'alimentation du véhicule par batteries.

En outre, la présence d'une batterie haute tension et basse tension avec des rôles propres combinée avec une capacité de liaison est un design avantageux car il dissocie la batterie qui alimente la chaine de traction de la batterie qui alimente les équipements auxiliaires. De ce fait, le dispositif selon l'invention permet d'optimiser la masse et le volume des batteries hautes et basse tension. Notamment, la connexion entre les batteries haute tension et basse tension permet de réduire la taille et la masse de la batterie basse tension car la batterie haute tension peut fournir une partie de l'énergie nécessaire à la batterie basse tension, agissant ainsi comme un réservoir d'énergie pour la batterie basse tension. Le dispositif selon l'invention est donc moins lourd et moins volumineux que les dispositifs de l'art antérieur.

Par « équipement auxiliaire », on entend tout dispositif ou appareil électrique se trouvant au sein du véhicule ferroviaire, autre que les éléments de la chaine de traction tels que le(s) moteur(s) électrique(s) de traction, également appelés « moteur de traction ».

Par « batterie », on entend tout module de stockage d'énergie électrique, en particulier rechargeable, pouvant comprendre un ou plusieurs éléments de stockage d'énergie électrique. Ainsi, le mot « batterie » peut désigner un ensemble de plusieurs batteries, ou plusieurs modules de stockage d'énergie électrique, éventuellement distribués au sein du véhicule électrique.

La tension délivrée par la batterie haute tension et/ou basse tension sont de préférence une tension continue DC.

Par « haute tension » on entend un signal électrique de tension supérieure ou égale à 750 volts.

Par « moyenne tension » on entend un signal électrique de tension comprise entre 120 volts et 750 volts.

Par « basse tension » on entend un signal électrique de tension inférieure ou égale à 120 volts.

A titre d'exemple non limitatif, la tension nominale de la batterie basse tension peut être de 72 volts ou de 110 volts tension continue DC. Le premier seuil peut être inférieur ou égal à 90 ou 91 % du niveau de charge nominal de la batterie basse tension.

Par « tension nominale » ou « niveau de charge nominale » on entend une tension optimale d'utilisation ou un niveau de charge optimal d'utilisation.

La deuxième unité de conversion de puissance d'urgence du dispositif selon l'invention peut comprendre un convertisseur d'adaptation et un convertisseur réversible isolé, ledit convertisseur réversible isolé pouvant comprendre un facteur de conversion plus grand que celui du convertisseur d'adaptation, en particulier entre deux et dix fois plus grand, et de préférence neuf fois plus grand.

La deuxième unité de puissance permet de convertir un signal électrique haute tension en un signal électrique basse tension.

Ainsi, la différence de facteur de conversion entre les deux convertisseurs appartenant à la deuxième unité de conversion de puissance permet d'obtenir une conversion plus précise et donc de garantir une conversion optimale du signal électrique haute tension en un signal électrique basse tension souhaité.

En outre, cela permet de limiter l'endommage de la batterie basse tension.

Le convertisseur réversible isolé du dispositif selon l'invention peut être agencé pour convertir un signal électrique haute tension supérieur à 750 volts, de préférence supérieur ou égal à 750 volts, et plus particulièrement un signal électrique haute tension égal à 750 volts, ou 1200 volts en un signal électrique de tension inférieure à 120 volts, de préférence égale à 80 volts.

Le convertisseur d'adaptation du dispositif selon l'invention peut être agencé pour convertir un signal électrique de tension inférieure ou égale à 120 volts, et plus particulièrement égale à 80 volts en un signal électrique de tension inférieure à 80 volts, de préférence égale à 72 volts.

Le convertisseur d'adaptation du dispositif selon l'invention peut être agencé pour alimenter la batterie basse tension avec un signal électrique de tension comprise entre 70 volts et 120 volts, de préférence égale à 72 volts.

Lorsque ledit véhicule est alimenté par la source d'énergie externe, la première unité de conversion de puissance peut être agencée pour charger :
- la batterie haute tension du dispositif selon l'invention via la deuxième unité de conversion de puissance, en particulier via le convertisseur réversible isolé, et
- la batterie basse tension du dispositif selon l'invention via un chargeur de batterie agencé pour fournir l'énergie appropriée à ladite batterie basse tension, le convertisseur d'adaptation servant d'interface entre ledit chargeur de batterie et la batterie basse tension.

Ainsi, lorsque le train est alimenté par sa source externe, c'est-à-dire lors du fonctionnement nominal du véhicule, le dispositif selon l'invention est chargé par les composants « classiques » intervenant dans le fonctionnement nominal du véhicule. Les batteries utilisées dans le dispositif d'alimentation d'urgence sont donc rechargeables et donc réutilisables et ne nécessitent pas l'utilisation d'élément supplémentaire non présent dans le mode nominal du véhicule. Lorsque le niveau de charge de la batterie haute tension du dispositif selon l'invention est supérieur à un second seuil, ladite batterie haute tension peut être agencée pour alimenter la première unité de conversion de puissance, laquelle pouvant alimenter au moins un équipement auxiliaire

Le second seuil peut être supérieur à 1200 volts, de préférence égal à 1200 volts ou 1500 volts en tension continue DC.

La batterie haute tension et/ou la batterie basse tension du dispositif selon l'invention peut se composer d'un ou plusieurs modules de batterie connectés en série comprenant chacun plusieurs cellules de stockage d'énergie.

Par conséquent, le dispositif d'urgence selon l'invention est adaptable à différents types et designs de batteries.

La batterie haute tension du dispositif selon l'invention peut se composer d'au moins deux batteries délivrant chacune une tension plus faible que la tension de sortie de ladite batterie haute tension, et reliées en série par un commutateur.

La batterie haute tension peut être agencée pour délivrer un signal électrique haute tension supérieur à 750 volts, de préférence supérieur ou égal à 750 volts, et plus particulièrement un signal électrique de tension égale à 750 volts, ou 1200 volts.

La batterie basse tension du dispositif selon l'invention peut comporter une densité d'énergie plus faible que celle de la batterie haute tension du dispositif selon l'invention, en particulier entre deux et douze fois plus faible, et de préférence dix fois plus faible.

Ainsi, suivant le dispositif selon l'invention, la taille de la batterie basse tension peut être « réduite » comparé à des systèmes conventionnels dans lesquels la batterie basse tension comprend une densité d'énergétique élevée pour assurer la fourniture d'énergie nécessaire aux besoins du véhicule ferroviaire. Suivant le dispositif selon l'invention, la taille de la batterie basse tension est plus réduite car la batterie haute tension peut fournir de l'énergie aux composants du véhicule ferroviaire, ce qui compense l'énergie que doit fournir la batterie basse tension. Le dispositif selon l'invention permet donc d'optimiser la densité d'énergie de la batterie basse tension. La batterie basse tension est donc moins volumineuse que celle utilisée dans des systèmes conventionnels.

La batterie haute tension et/ou la batterie basse tension du dispositif selon l'invention peut comprendre une batterie au lithium.

La batterie basse tension du dispositif selon l'invention peut être agencée pour alimenter les équipements auxiliaires pendant au moins trois heures.

Le dispositif d'urgence selon l'invention peut fonctionner pendant une grande période temporelle ce qui permet au véhicule d'atteindre des gares ou stations d'arrêt éloignées pour une prise en charge dudit véhicule.

En outre, cela garantit une grande plage de fonctionnement dudit dispositif d'urgence.

La batterie basse tension du dispositif selon l'invention peut être agencée pour alimenter au moins un équipement de sécurité.

Selon un autre aspect de l'invention il est proposé un véhicule ferroviaire comprenant un dispositif d'alimentation selon l'invention.

Un tel véhicule ferroviaire peut être un train, une locomotive, etc.

Selon un autre aspect de l'invention, il est proposé procédé d'alimentation d'urgence d'un véhicule ferroviaire mis en œuvre par le dispositif d'alimentation d'urgence d'un véhicule ferroviaire selon l'invention, ledit procédé étant utilisé lorsque ledit véhicule ferroviaire n'est plus alimenté par une source d'alimentation externe et comprenant :
- une alimentation d'une chaine de traction dudit véhicule via la première unité de conversion de puissance, ladite première unité de conversion de puissance étant alimentée par la batterie haute tension délivrant un signal électrique haute tension,
- une alimentation, par la batterie basse tension délivrant un signal électrique basse tension, d'au moins un équipement auxiliaire.

Le procédé selon l'invention comprend, lorsque le niveau de charge de ladite batterie basse tension est inférieur ou égal à un premier seuil :
- une liaison de la batterie haute tension et basse tension par une deuxième unité de conversion de puissance, et
- une alimentation de ladite batterie basse tension par ladite batterie haute tension.

Le procédé selon l'invention garantit les mêmes avantages que le dispositif selon l'invention.

Le procédé selon l'invention permet donc de garantir un fonctionnement optimal du véhicule lorsque ce dernier est alimenté par batteries, ce qui permet entres autres d'augmenter le temps de fonctionnement par batteries.

En outre, le procédé selon l'invention permet au dispositif selon l'invention d'être moins volumineux et moins lourd.

La deuxième unité de conversion de puissance d'urgence peut comprendre le convertisseur d'adaptation et le convertisseur réversible isolé, ledit procédé selon l'invention pouvant comprendre :
- une conversion, par le convertisseur réversible isolé, d'un signal électrique haute tension supérieur ou égal à 750 volts, et plus particulièrement un signal électrique haute tension égal à 750 volts, ou 1200 volts en un signal électrique de tension inférieure à 120 volts, de préférence égale à 80 volts, et
- une conversion, par le convertisseur d'adaptation, d'un signal électrique de tension inférieure ou égale à 120 volts, et plus particulièrement égale à 80 volts en un signal électrique de tension inférieure à 80 volts, de préférence égale à 72 volts.

Le procédé selon l'invention peut comprendre une alimentation par le convertisseur d'adaptation de la batterie basse tension avec un signal électrique de tension comprise entre 70 volts et 120 volts, de préférence égale à 72 volts.

Le procédé selon l'invention peut comprendre, lorsque ledit véhicule est alimenté par la source d'énergie externe :
- une charge par la première unité de conversion de puissance, de la batterie haute tension via la deuxième unité de conversion de puissance, en particulier via le convertisseur réversible isolé, et
- une charge par la première unité de conversion de puissance, de la batterie basse tension via un chargeur de batterie agencé pour fournir l'énergie appropriée à ladite batterie basse tension, le convertisseur d'adaptation servant d'interface entre ledit chargeur de batterie et la batterie basse tension.

Le procédé selon l'invention peut comprendre, lorsque le niveau de charge la batterie haute tension est supérieur à un second seuil :
- une alimentation, par ladite batterie haute tension, de la première unité de conversion de puissance,
- une alimentation, par la première unité de conversion de puissance, d'au moins un équipement auxiliaire.

La batterie basse tension du procédé selon l'invention peut être agencée pour alimenter au moins un équipement de sécurité.

### Brève description des dessins

D'autres avantages et particularités de l'invention apparaîtront à la lecture de la description détaillée de mises en œuvre et de modes de réalisation nullement limitatifs, et des dessins annexés suivants.
La FIGURE 1 est une représentation schématique d'un exemple de réalisation non limitatif d'un procédé selon l'invention ;
La FIGURE 2 est une première représentation schématique d'un exemple de réalisation d'un dispositif selon l'invention, dans une configuration dans laquelle le véhicule ferroviaire n'est pas alimenté par une source externe ;
La FIGURE 3 est un représentation schématique d'un exemple de réalisation non limitatif d'un circuit électrique d'un dispositif selon l'invention ;
La FIGURE 4 est une deuxième représentation schématique du dispositif de la FIGURE 2, dans une configuration dans laquelle le véhicule ferroviaire est alimenté par une source externe.

### Description détaillée des figures

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

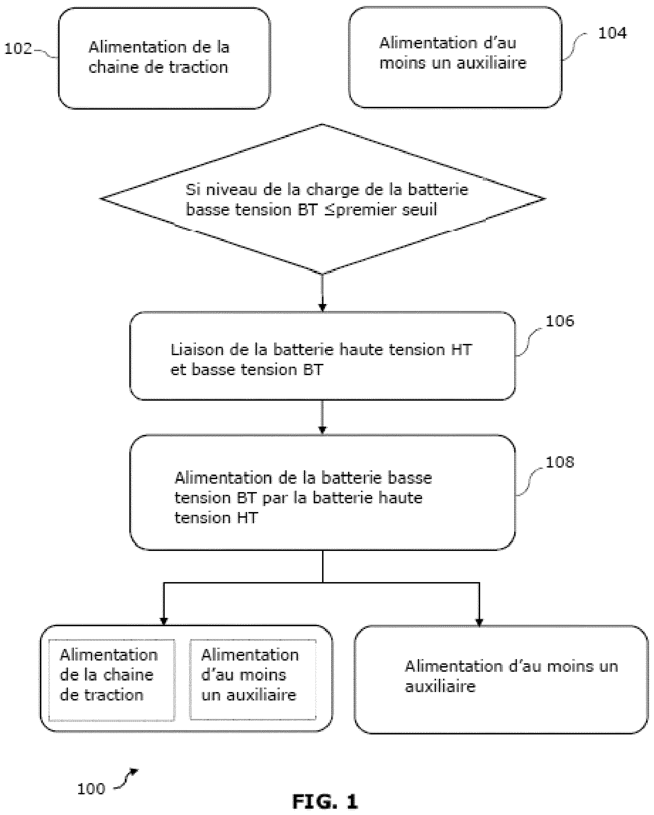

La FIGURE 1 est une représentation schématique d'un exemple de réalisation non limitatif d'un procédé selon l'invention.

Le procédé 100 est un procédé d'alimentation d'urgence d'un véhicule ferroviaire lorsque ledit véhicule ferroviaire n'est plus alimenté par une source d'alimentation externe, telle qu'une caténaire.

Le procédé 100 comprend alors, une alimentation 102 de la chaine de traction du véhicule ferroviaire via une première unité de conversion de puissance. La première unité de conversion de puissance est alimentée par une batterie haute tension délivrant un signal électrique haute tension.

Le procédé 100 comprend aussi une alimentation 104, par une batterie basse tension délivrant un signal électrique basse tension, d'au moins un équipement auxiliaire.

Lorsque le niveau de charge de ladite batterie basse tension est inférieur ou égal à un premier seuil, le procédé 100 comprend alors
- une liaison 106 de la batterie haute tension et de la batterie basse tension. Les batteries haute tension et basse tension sont reliées par une deuxième unité de conversion de puissance, et
- une alimentation 108 de la batterie basse tension par la batterie haute tension.

Ainsi, tant que le niveau de charge de la batterie basse tension est supérieur au premier seuil, les batteries haute tension et basse tension ne sont pas connectées. Dans ce cas (quand les batteries haute et basse tension ne sont pas connectées), la batterie haute tension est agencée pour alimenter la chaine de traction du véhicule via la première unité de conversion de puissance. La batterie basse tension est agencée pour alimenter au moins un équipement auxiliaire.

Le premier seuil peut être atteint lorsque le niveau de charge de la batterie basse tension est inférieur ou égal à 91% ou 90% du niveau de charge nominale de la batterie basse tension.

Dans une première variante du procédé 100, lorsque le véhicule peut circuler, la chaine traction reste alimentée par ladite batterie haute tension et l'au moins un auxiliaire reste alimenté par la batterie basse tension.

Par exemple, lorsque le déplacement du véhicule est bloqué par un obstacle ou par une commande provenant d'un dispositif de commande, la chaine de traction dudit véhicule n'est plus alimentée par la batterie haute tension.

Ainsi, dans une deuxième variante, lorsque le véhicule est à l'arrêt, la première unité de conversion de puissance peut être alimentée par la batterie haute tension même si le véhicule ferroviaire doit rester à l'arrêt. Dans ce cas, l'alimentation de la chaine de traction est interrompue par le dispositif de commande suite, par exemple, à une commande du conducteur dudit véhicule. Le mouvement du véhicule est bloqué.

Dans une troisième variante du procédé 100, si une commande est envoyée pour bloquer le mouvement du véhicule ou si le véhicule est bloqué dans son mouvement, par exemple, par un obstacle sur la voie, l'alimentation 102 de la chaine de traction via la première unité de conversion de puissance par la batterie haute tension est arrêtée par le dispositif de commande. Aucune énergie n'est envoyée à la première unité de conversion de puissance. La batterie basse tension peut quant à elle continuer l'alimentation 104 des auxiliaires du véhicule.

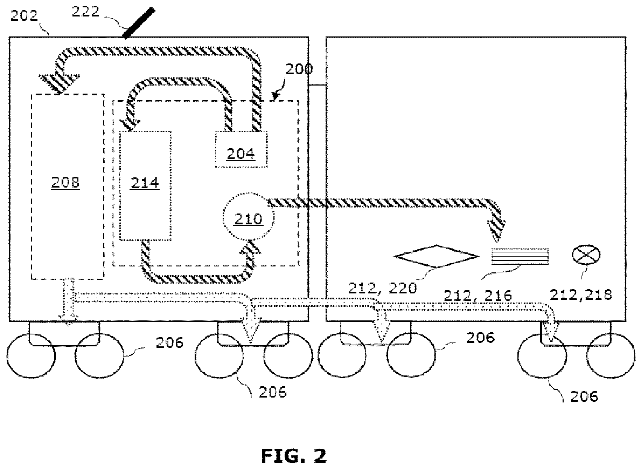

La FIGURE 2 est une première représentation schématique d'un exemple de réalisation d'un dispositif selon l'invention, dans une configuration dans laquelle le véhicule ferroviaire n'est pas alimenté par une source externe.

Sur la FIGURE 2, les éléments représentés par des flèches épaisses avec un motif illustrent une alimentation en tension (continue DC).

Le dispositif 200 de la FIGURE 2 est un dispositif autonome d'alimentation d'urgence d'un véhicule ferroviaire 202, embarqué dans ledit véhicule ferroviaire 202. Le dispositif 200 est utilisé lorsque ledit véhicule ferroviaire 202 n'est plus alimenté par une source d'alimentation externe, par exemple lors d'une panne d'alimentation.

Le dispositif d'alimentation d'urgence 200 comprend :
- une batterie haute tension 204 délivrant un signal électrique haute tension et agencée pour alimenter une chaine de traction 206 du véhicule ferroviaire 202 via une première unité de conversion de puissance 208, et
- une batterie basse tension 210 délivrant un signal électrique basse tension et agencée pour alimenter au moins un équipement auxiliaire 212.

Le dispositif 200 est agencé de sorte que, lorsque le niveau de charge de ladite batterie basse tension 210 est inférieur ou égal au premier seuil, la batterie haute tension 204 et basse tension 210 sont reliées l'une à l'autre via une deuxième unité de conversion de puissance 214 de manière à ce que ladite batterie basse tension 210 est alimentée par ladite batterie haute tension 204.

La batterie haute tension 204 et basse tension 210 sont agencées pour délivrer une tension continue DC.

Pour une batterie basse tension comprenant un niveau de charge nominale de 72 volts tension continue DC, ce premier seuil peut être atteint lorsque le niveau de charge de la batterie basse tension est égal à 66 volts tension continue DC.

Ainsi, la deuxième unité de conversion de puissance 214 permet de convertir un signal électrique haute tension en un signal électrique basse tension.

En outre, tant que le niveau de charge de la batterie basse tension 210 est supérieur au premier seuil (non illustré), les batteries haute tension 204 et basse tension 210 ne sont pas connectées. Dans ce cas, la batterie haute tension 204 est agencée pour alimenter la chaine de traction 206 du véhicule ferroviaire 202 via la première unité de conversion de puissance 208. La batterie basse tension 210 est agencée pour alimenter au moins un équipement auxiliaire 212.

Les équipements auxiliaires comprennent :
- des climatiseurs, moyens de chauffage, moyens d'aération 216,
- des moyens d'éclairage 218, et
- des équipements de sécurité 220.

La batterie basse tension 210 peut alimenter de manière cumulative ou alternative, les équipements auxiliaires 212.

La chaine de traction 206 comprend au moins un moteur (non illustré) agencé pour transformer l'énergie électrique en sortie de la première unité de conversion de puissance 208 en énergie mécanique pour faire avancer le véhicule ferroviaire 202 et des composants mécaniques pour rendre effectif l'avancement dudit véhicule 202.

La source d'alimentation externe peut être une caténaire (non illustrée). Le véhicule comprend un pantographe 222 agencée pour, lorsque le véhicule ferroviaire 202 est connecté à la source d'énergie extérieure, capter l'énergie électrique depuis la caténaire. Sur la FIGURE 2, le pantographe 222 n'est pas connecté à la source d'énergie externe.

La première unité de conversion de puissance 208 est agencée pour changer la forme de l'énergie électrique, par exemple convertir du courant alternatif AC en courant continu DC ; ou convertir le courant continu DC en courant alternatif AC, etc.

La batterie haute tension 204 et/ou la batterie basse tension 210 peut comprendre une batterie au lithium. En particulier, les batteries haute tension 204 et basse tension 210 peuvent être des batteries au lithium.

La batterie basse tension 210 peut être dimensionnée pour alimenter les équipements auxiliaires pendant au moins trois heures.

La batterie basse tension peut comprendre une densité d'énergie plus faible que celle de la batterie haute tension, en particulier entre deux et douze fois plus faible, et de préférence dix fois plus faible. La batterie basse tension est donc plus compact que celle qui peut être utilisée dans des systèmes conventionnels.

Lorsque le véhicule ferroviaire 202, qui peut par exemple être un train, est immobilisé sur la voie ferrée par obligation, la chaine de traction 206 du véhicule 202 peut être bloquée par un dispositif de commande (non illustré).

Lorsque le déplacement du véhicule ferroviaire 202 est bloqué par un obstacle ou par une commande provenant d'un dispositif de commande, la chaine de traction dudit véhicule 202 n'est plus alimentée par la batterie haute tension 204.

Ainsi l'alimentation de la chaine de traction peut être bloquée par le dispositif de commande.

Le dispositif 200 est agencé pour mettre en œuvre les étapes du procédé 100 de la FIGURE 1.

En outre, la batterie basse tension 210 est agencée pour alimenter au moins un équipement de sécurité 220.

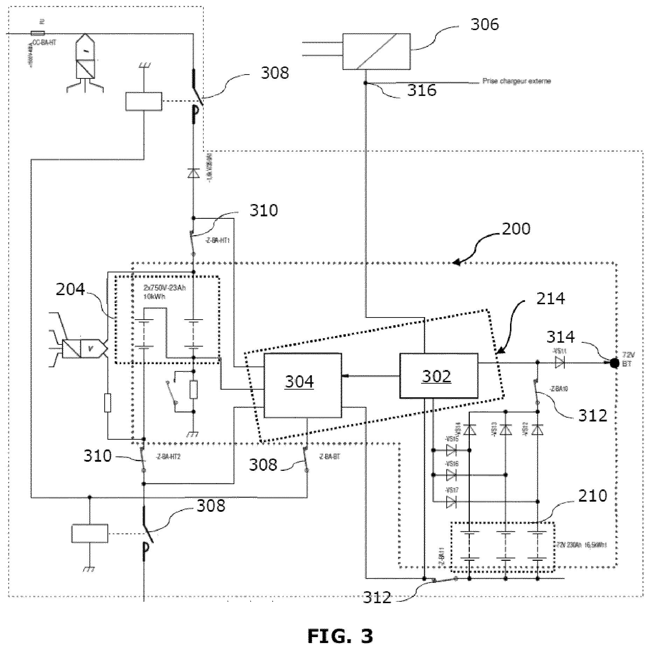

La FIGURE 3 est un représentation schématique d'un exemple de réalisation d'un circuit électrique d'un dispositif selon l'invention, et en particulier du dispositif 200 de la FIGURE 2.

La deuxième unité de conversion de puissance d'urgence 214 comprend un convertisseur d'adaptation 302 et un convertisseur réversible isolé 304.

Le convertisseur réversible isolé 304 est agencé pour servir d'interface entre la batterie haute tension 204 et le convertisseur d'adaptation 302. Ainsi, le convertisseur réversible isolé 304 est connecté à la batterie haute tension 204 et au convertisseur d'adaptation 302.

Le convertisseur d'adaptation 302 est agencé pour servir d'interface entre le convertisseur réversible isolé 304 et la batterie basse tension 210. Ainsi, le convertisseur d'adaptation est connecté à la batterie basse tension 210 et au convertisseur réversible isolé 304.

Le convertisseur réversible isolé 304 comprend un facteur de conversion plus grand que celui du convertisseur d'adaptation 302, en particulier entre deux et dix fois plus grand, et de préférence neuf fois plus grand.

Le convertisseur réversible isolé 304 est agencé pour convertir un signal électrique haute tension supérieur à 750 volts, de préférence supérieur ou égal à 750 volts, et plus particulièrement un signal électrique haute tension égal à 750 volts, ou 1200 volts en un signal électrique de tension inférieure à 120 volts, de préférence égale à 80 volts.

Le convertisseur d'adaptation 302 est agencé pour convertir un signal électrique de tension inférieure ou égale à 120 volts, et plus particulièrement égale à 80 volts en un signal électrique de tension inférieure à 80 volts, de préférence égale à 72 volts.

Dans le cas illustré en figure 3, la batterie haute tension 204 est une batterie lithium composée de plusieurs modules connectés en série, qui sont formés eux de plusieurs cellules. La batterie haute tension 204 est agencée pour délivrer une tension de 750 volts (V), avec une capacité de 23 Ampères heures (Ah) et une énergie minimale de 10 kilowattheures (kWh). La batterie haute tension est aussi agencée pour fournir une tension supérieure à 1200 V en amont d'un disjoncteur principal courant continu (non illustré), qui par le biais de la première unité de conversion 208 (non illustré sur cette figure), alimente les moteurs de traction du véhicule 202.

Lors d'une panne d'alimentation, quand le véhicule n'est plus alimenté par la source d'énergie externe (par exemple, par la caténaire), la batterie haute tension 204 alimente la batterie basse tension 210 et sert ainsi de réserve énergétique supplémentaire pour la batterie basse tension 210. L'alimentation de la batterie basse tension 210 par la batterie haute tension 204 permet de garantir une fourniture d'énergie plus longue aux équipements auxiliaires.

La batterie basse tension 210 est une batterie au lithium composée de plusieurs modules connectés en série, qui sont formés eux de plusieurs cellules. La batterie basse tension 210 est agencée pour délivrer une tension de 72 V, avec une capacité de 230 Ah et une énergie de 16,5 kWh. La batterie basse tension 210 alimente avec une tension continue (DC) de 72 V les équipements auxiliaires du train tels que par exemple l'éclairage, ventilation, etc.

Ainsi, la batterie haute tension 204 et la batterie basse tension 210 se composent d'un ou plusieurs modules de batterie connectés en série comprenant chacun plusieurs cellules de stockage d'énergie.

La batterie haute tension 204 est connectée en amont d'un disjoncteur principal signal continu DC (non illustré). La batterie haute tension 204 produit une tension d'alimentation équivalente à celle injectée au disjoncteur principal signal continue DC du véhicule ferroviaire.

La batterie basse tension 210 est de plus faible densité d'énergie que la batterie haute tension 204 et est connectée pour alimenter l'ensemble des équipements auxiliaires 212 fonctionnant en basse tension.

Dans une variante non illustrée, la batterie haute tension 204 se compose d'au moins deux batteries délivrant une tension plus faible que la tension de sortie de ladite batterie haute tension, par exemple deux batteries moyennes tensions, reliées en série par un commutateur.

Le convertisseur d'adaptation 302 est un convertisseur en tension continue DC/DC et est connecté à la batterie basse tension 210 et à un chargeur de batterie 306. Le chargeur de batterie 306 est agencé pour garantir une charge adéquate de la batterie basse tension 210 lorsque le véhicule 202 est alimenté par la source externe. Le convertisseur d'adaptation 302 est également connecté au convertisseur réversible isolé 304. Le convertisseur d'adaptation 302 est agencé pour alimenter la batterie basse tension avec un signal électrique de tension comprise entre 70 volts et 120 volts, de préférence égale à 72 volts. Dans le cas considéré, le chargeur de batterie 306 et le convertisseur d'adaptation sont agencés pour alimenter la batterie basse tension 210 par une tension continue DC de 72 volts (V).

Le chargeur de batterie 306 est connecté au convertisseur d'adaptation 302 via un premier nœud 316.

Le convertisseur réversible isolé 304 est un convertisseur en tension continue DC/DC et est agencé pour convertir une tension de +/- 750 V en une tension de +/- 80 V. A titre d'exemple non limitatif, le convertisseur réversible isolé 304 est un convertisseur de puissance 4 kilowatts (kW) reliant la tension +/- 750 V tension continue DC et le réseau basse tension +/- 80 V tension continue DC et comprenant un niveau d'isolement de 4 kV. Le convertisseur réversible isolé 304 est agencée pour charger la batterie haute tension 204 lorsque le véhicule 202 est alimenté par la source d'énergie externe. Le convertisseur réversible isolé 304 est connectée au convertisseur d'adaptation 302, lequel étant connecté à la batterie basse tension 210, pour permettre à la batterie haute tension 204 d'alimenter la batterie basse tension 210 lorsque le niveau de la charge de la batterie basse tension 210 est inférieure ou égale au premier seuil. A titre d'exemple non limitatif, le premier seuil peut être atteint lorsque le niveau de la charge de la batterie basse tension 210 est de 50 V tension continue DC.

Des organes de commutation, de surveillance et de sécurité, correspondant par exemple à des contacteurs, diodes, etc., sont aussi illustrés en figure 3.

Des premiers commutateurs 308 sont agencés pour connecter ou déconnecter la batterie haute tension 204 à la première unité de conversion de puissance 208 (non illustrée en figure 3), c'est-à-dire au système de conversion « principal » du véhicule ferroviaire.

Des seconds commutateurs 310 sont agencés pour connecter ou déconnecter la batterie haute tension 204 avec la deuxième unité de conversion de puissance 214, notamment via le convertisseur réversible isolé 304.

Ainsi, la batterie haute tension 204 peut être connectée à la première unité de conversion de puissante 208 sans être connectée à la deuxième unité de conversion de puissance 214.

Des troisièmes commutateurs 312 sont agencés pour connecter ou déconnecter la batterie basse tension 210 avec :
- la deuxième unité de conversion de puissance 214 via le convertisseur d'adaptation 302, ou
- le circuit d'alimentation basse tension du véhicule ferroviaire via le nœud 314.

Les équipements auxiliaires (non illustré en figure 3) sont connectés à la batterie basse tension via un nœud 314.

L'alimentation de la batterie basse tension 210 par la batterie haute tension 204 est commandée et/ou contrôlée par le dispositif de commande (non illustré). Le dispositif de commande est agencé pour contrôler et commander les batteries haute 204 et basse tension 210. Ce dispositif de commande de batterie est aussi connecté à la deuxième unité de conversion de puissance 214. Ce dispositif de commande de batterie est notamment connecté au convertisseur réversible isolé 304 et au convertisseur d'adaptation 302.

Ainsi, le dispositif de commande est agencé pour commander l'ouverture ou la fermeture des premiers, seconds et troisièmes commutateurs 308, 310, 312 de manière simultanée ou alternée.

Par conséquent, la batterie haute tension 204 et/ou la batterie basse tension 210 peut ne pas être connectée à la deuxième unité de conversion de puissance 214 quand les commutateurs 308 et/ou 310 et/ou 312 sont ouverts. En outre, les batteries haute tension 204 et basse tension 210 ne sont pas forcément connectées entres elles quand les commutateurs 308 et/ou 310 et/ou 312 sont ouverts.

Dans une première variante non illustrée, lorsque le niveau de charge la batterie haute tension 204 est supérieur à un second seuil, ladite batterie haute tension 204 est agencée pour alimenter la première unité de conversion de puissance 208, laquelle alimente au moins un équipement auxiliaire 212. A titre d'exemple non limitatif, le second seuil peut être de 1200 V tension continue DC ou de 1500 V tension continue DC.

Dans ce cas, lorsque la batterie haute tension 204 n'est pas connectée à la deuxième unité de conversion de puissance 214, la batterie haute tension 204 est en charge de fournir l'énergie et la puissance nécessaire pour secourir le véhicule 202 et le permettre de déposer les passagers à la gare suivante. La puissance générée par la batterie haute tension 204 permettra, par la première unité de conversion de puissance 208, d'alimenter la chaine de traction 206 et au moins un équipement auxiliaire 212.

Le circuit de la FIGURE 3 est configurée pour réaliser :
- une conversion, par le convertisseur réversible isolé 304, d'un signal électrique haute tension supérieur à 750 volts, et plus particulièrement un signal électrique haute tension égal à 750 volts, ou 1200 volts en un signal électrique de tension inférieure à 120 volts, de préférence égale à 80 volts, et
- une conversion, par le convertisseur d'adaptation 302, d'un signal électrique de tension inférieure ou égale à 120 volts, et plus particulièrement égale à 80 volts en un signal électrique de tension inférieure à 80 volts, de préférence égale à 72 volts.

En particulier, dans l'exemple donné sur la FIGURE 3, le circuit électrique réalise :
- la conversion par le convertisseur réversible isolé 304, d'un signal électrique haute tension supérieur ou égal à 750 volts en une tension égale à 80 volts, et
- la conversion, par le convertisseur d'adaptation 302, d'un signal électrique de tension égale à 80 volts en une tension de 72 volts.

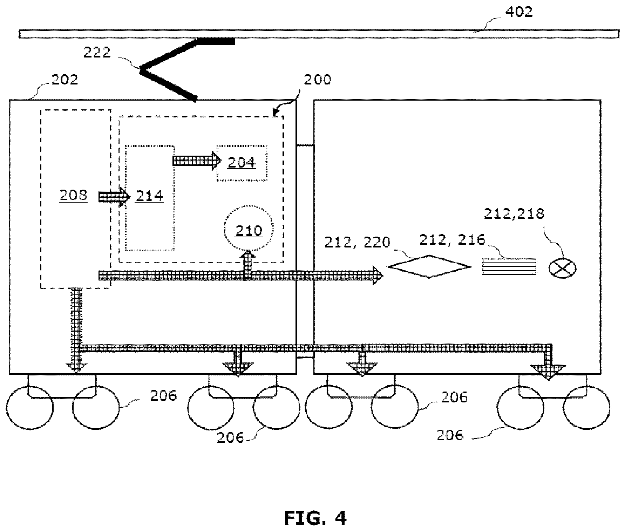

La FIGURE 4 est une représentation schématique du dispositif de la FIGURE 2, dans une configuration dans laquelle le véhicule ferroviaire est alimenté par une source externe. La source externe 402 est une caténaire 402.

Sur la FIGURE 4, les éléments représentés par des flèches épaisses avec motif illustrent une alimentation en tension (continue DC).

Ainsi, le véhicule ferroviaire 202 fonctionne dans un mode de fonctionnement normal, appelé aussi mode nominal. Dans ce cas, le système de traction classique composé de la caténaire 402, du pantographe 222, de la première unité de conversion de puissance 208 sont reliés. La première unité de conversion de puissance 208 est alimentée en tension via le pantographe 222, lui-même alimenté par la caténaire 402. Ainsi, la première unité de conversion de puissance 208 alimente :
- la chaine de traction 206 composée du moteur et des composants mécaniques afin d'assurer le mouvement du train, et
- les équipements auxiliaires 212.

Une partie de l'énergie captée par la caténaire est utilisée pour recharger la batterie haute tension et la batterie basse tension.

La première unité de puissance 208 alimente la deuxième unité de conversion de puissance 214.

En particulier, la première unité de conversion de puissance 208 est agencée pour charger :
- la batterie haute tension 204 via la deuxième unité de conversion de puissance 214, en particulier via le convertisseur réversible isolé, et
- la batterie basse tension 210 via un chargeur de batterie (illustré en Fig. 3) agencé pour fournir l'énergie appropriée à ladite batterie basse tension 210, le convertisseur d'adaptation servant d'interface entre ledit chargeur de batterie et la batterie basse tension 210.

Les équipements auxiliaires sont alimentés en basse tension par la première unité de conversion de puissance directement via le chargeur de batterie 306, ce dernier étant connecté à la batterie basse tension par l'intermédiaire du convertisseur d'adaptation 302.

Le dispositif 200 de la FIGURE 4 est agencé pour réaliser les étapes du procédé 100 de la FIGURE 1.

En particulier, sur la FIGURE 4, le dispositif 200 est représenté dans une configuration dans laquelle, il réalise :
- une charge, par la première unité de conversion de puissance 208, de la batterie haute tension 204 via la deuxième unité de conversion de puissance 214, en particulier via le convertisseur réversible isolé 304, et
- une charge, par la première unité de conversion de puissance 208, de la batterie basse tension 210 via un chargeur de batterie 306 (illustré en figure 3) agencé pour fournir l'énergie appropriée à ladite batterie basse tension 210, le convertisseur d'adaptation 302 servant d'interface entre ledit chargeur de batterie 306 et la batterie basse tension 210.

Bien entendu, l'invention n'est pas limitée aux exemples qui viennent d'être décrits. De nombreuses modifications peuvent être apportées à ces exemples sans sortir du cadre de la présente invention telle que décrite.

## Revendications

1. Dispositif autonome d'alimentation d'urgence (200) d'un véhicule ferroviaire (202), embarqué dans ledit véhicule ferroviaire (202), utilisé lorsque ledit véhicule ferroviaire (202) n'est plus alimenté par une source d'alimentation externe (402), ledit dispositif d'alimentation d'urgence (200) comprenant :
- une batterie haute tension (204) délivrant un signal électrique haute tension et agencée pour alimenter une chaine de traction (206) du véhicule ferroviaire (202) via une première unité de conversion de puissance (208), et
- une batterie basse tension (210) délivrant un signal électrique basse tension et agencée pour alimenter au moins un équipement auxiliaire (212),
**caractérisé en ce que** ledit dispositif (200) est agencé de sorte que, lorsque le niveau de charge de ladite batterie basse tension (210) est inférieur ou égal à un premier seuil, la batterie haute tension (204) et basse tension (210) sont reliées l'une à l'autre via une deuxième unité de conversion de puissance (214) de manière à ce que ladite batterie basse tension (210) est alimentée par ladite batterie haute tension (204).

2. Dispositif selon la revendication 1, **caractérisé en ce que** la deuxième unité de conversion de puissance d'urgence (214) comprend un convertisseur d'adaptation (302) et un convertisseur réversible isolé (304), ledit convertisseur réversible isolé (304) comprenant un facteur de conversion plus grand que celui du convertisseur d'adaptation (302), en particulier entre deux et dix fois plus grand, et de préférence neuf fois plus grand.

3. Dispositif (200) selon la revendication 2, **caractérisé en ce que** :
- le convertisseur réversible isolé (304) est agencé pour convertir un signal électrique haute tension supérieur à 750 volts, de préférence supérieur ou égal à 750 volts, et plus particulièrement un signal électrique haute tension égal à 750 volts, ou 1200 volts en un signal électrique de tension inférieure à 120 volts, de préférence égale à 80 volts, et
- le convertisseur d'adaptation (302) est agencé pour convertir un signal électrique de tension inférieure ou égale à 120 volts, et plus particulièrement égale à 80 volts en un signal électrique de tension inférieure à 80 volts, de préférence égale à 72 volts.

4. Dispositif (200) selon l'une quelconque des revendications 2 à 3, **caractérisé en ce que** lorsque ledit véhicule (202) est alimenté par la source d'énergie externe (402), la première unité de conversion de puissance (208) est agencée pour charger :
- la batterie haute tension (204) via la deuxième unité de conversion de puissance (214), en particulier via le convertisseur réversible isolé (304), et
- la batterie basse tension (210) via un chargeur de batterie (306) agencé pour fournir l'énergie appropriée à ladite batterie basse tension (210), le convertisseur d'adaptation (302) servant d'interface entre ledit chargeur de batterie (306) et la batterie basse tension (210).

5. Dispositif (200) selon l'une quelconque des revendications précédentes, **caractérisé en ce que** lorsque le niveau de charge la batterie haute tension (204) est supérieur à un second seuil, ladite batterie haute tension (204) est agencée pour alimenter la première unité de conversion de puissance (208), laquelle alimente au moins un équipement auxiliaire (212).

6. Dispositif (200) selon l'une quelconque des revendications précédentes, **caractérisé en ce que** la batterie haute tension (204) et/ou la batterie basse tension (210) se compose d'un ou plusieurs modules de batterie connectés en série comprenant chacun plusieurs cellules de stockage d'énergie.

7. Dispositif (200) selon l'une quelconque des revendications précédentes, **caractérisé en ce que** la batterie haute tension (204) se compose d'au moins deux batteries délivrant chacune une tension plus faible que la tension de sortie de ladite batterie haute tension, et reliées en série par un commutateur.

8. Dispositif (200) selon l'une quelconque des revendications précédentes, **caractérisé en ce que** la batterie basse tension (210) est agencée pour alimenter au moins un équipement de sécurité (220).

9. Véhicule ferroviaire comprenant un dispositif (200) d'alimentation d'urgence selon l'une quelconque des revendications précédentes.

10. Procédé (100) d'alimentation d'urgence d'un véhicule ferroviaire (202) mis en œuvre par le dispositif d'alimentation d'urgence d'un véhicule ferroviaire selon l'une quelconque des revendications précédentes, ledit procédé (100) étant utilisé lorsque ledit véhicule ferroviaire (202) n'est plus alimenté par une source d'alimentation externe (402) et comprenant :
- une alimentation (102) d'une chaine de traction dudit véhicule (202) via la première unité de conversion de puissance (208), ladite première unité de conversion de puissance (208) étant alimentée par la batterie haute tension (204) délivrant un signal électrique haute tension,
- une alimentation (104), par la batterie basse tension (210) délivrant un signal électrique basse tension, d'au moins un équipement auxiliaire (212),
**caractérisé en ce que** ledit procédé (100) comprend, lorsque le niveau de charge de ladite batterie basse tension (210) est inférieur ou égal à un premier seuil :
- une liaison (106) de la batterie haute tension (204) et basse tension (210) par une deuxième unité de conversion de puissance (214), et
- une alimentation (108) de ladite batterie basse tension (210) par ladite batterie haute tension (204).

11. Procédé (100) selon la revendication 10, **caractérisé en ce que** la deuxième unité de conversion de puissance d'urgence (214) comprend le convertisseur d'adaptation (302) et le convertisseur réversible isolé (304), ledit procédé comprenant :
- une conversion, par le convertisseur réversible isolé (304), d'un signal électrique haute tension supérieur ou égal à 750 volts, et plus particulièrement un signal électrique haute tension égal à 750 volts, ou 1200 volts en un signal électrique de tension inférieure à 120 volts, de préférence égale à 80 volts, et
- une conversion, par le convertisseur d'adaptation (302), d'un signal électrique de tension inférieure ou égale à 120 volts, et plus particulièrement égale à 80 volts en un signal électrique de tension inférieure à 80 volts, de préférence égale à 72 volts.

12. Procédé (100) selon l'une quelconque des revendications 10 ou 11, caractérisé en ce la deuxième unité de conversion de puissance d'urgence (214) comprend le convertisseur d'adaptation (302) et le convertisseur réversible isolé (304), ledit procédé comprenant, lorsque ledit véhicule (202) est alimenté par la source d'énergie externe (402) :
- une charge par la première unité de conversion de puissance (208), de la batterie haute tension (204) via la deuxième unité de conversion de puissance (214), en particulier via le convertisseur réversible isolé (304), et
- une charge par la première unité de conversion de puissance (208), de la batterie basse tension (210) via un chargeur de batterie (306) agencé pour fournir l'énergie appropriée à ladite batterie basse tension (210), le convertisseur d'adaptation (302) servant d'interface entre ledit chargeur de batterie (306) et la batterie basse tension (210).

13. Procédé (100) selon l'une quelconque des revendications 10 à 12, **caractérisé en ce qu'**il comprend, lorsque le niveau de charge la batterie haute tension (204) est supérieur à un second seuil :
- une alimentation, par ladite batterie haute tension (204), de la première unité de conversion de puissance (208),
- une alimentation, par la première unité de conversion de puissance (208), d'au moins un équipement auxiliaire (212).

14. Procédé (100) selon l'une quelconque des revendications 10 à 13, **caractérisé en ce que** la batterie basse tension (210) est agencée pour alimenter au moins un équipement de sécurité (220).
